# DEMANDE DE BREVET EUROPEEN

(11) **EP 0 553 008 A1**
(43) Date de publication de la demande: **28.07.1993**
(21) Numéro de dépôt: 93400094.4
(22) Date de dépôt: 15.01.1993
(51) Int. Cl.: G01K 11/06

(54) **Indicateur d'etat de conservation pour produits réfrigérés ou congelés**

(30) Priorité: 22.01.1992 FR 9200735
(71) Demandeur: SOCIETE COOL S.a.r.l., F-07800 La Voulte sur Rhône (FR)
(72) Inventeur: Berrebi, Georges, F-26500 Bourg les Valences (FR); Toporenko, Yves, F-75011 Paris (FR)
(74) Mandataire: Andreeff, François

(57) **Abrégé**

L'invention concerne un appareillage comportant (figure 1) un boîtier étanche (1) muni d'une surface de fixation (11) garnie d'un adhésif de fixation (12), une enveloppe réservoir (9) en paraffine par exemple qui se rompt ou s'ouvre sous l'effet de la solidification d'une goutte d'un liquide eutectique que l'enveloppe-réservoir enrobe.

Cet appareil est utilisable comme indicateur de conservation pour produits congelés ou réfrigérés.

## Description

L'invention concerne un indicateur de conservation pour produits congelés ou réfrigérés et le procédé de mise en oeuvre de cet indicateur.

L'indicateur comprend une partie active, constituée par une goutte de liquide eutectique, ou alcoolique, fortement colorée que l'on emprisonne à l'intérieur d'une enveloppe à parois minces et hermétiques de surcroît assurant un remplissage intégral.

La goutte ainsi enrobée, est entourée de matière absorbante ou adsorbante, est placée dans une enveloppe transparente et hermétique assurant sa protection mécanique, et son amarrage aux produits et emballages à surveiller.

A la congélation, l'enveloppe de la goutte se brise sous l'effet de la dilatation du liquide, la masse solidifée, se liquéfie lors d'une remontée de température, et imprègne la matière absorbante ou adsorbante qui l'entoure, et la colore, indiquant un changement d'état.

La présente invention concerne un dispositif qui permet de reconnaître immédiatement, par un simple examen visuel, si un produit froid et surtout surgelé est propre ou non à la consommation.

Les surgelés sont des produits sûrs, fabriqués avec une extrême rigueur, présentant des intérêts incontestables sur le plan microbiologique (au-dessous de - 18 °C, les microorganismes ne se développent plus) ; toutefois, des intoxications alimentaires sont possibles, notamment dans le cas où les surgelés sont accidentellement décongelés puis recongelés.

Un acheteur doit pouvoir vérifier qu'un produit n'a subi aucune rupture de la chaîne de froid. En dehors de l'examen des boîtes ou des paquets proposés sur le marché des consommateurs, cet examen n'étant d'ailleurs pas fable, on trouve le brevet français relatif aux produits surgelés (à - 18 °C au moins) n° 2626072 de Monsieur TOPORENKO proposant un moyen de détection simple et rapide d'une rupture de la chaine du froid : en effet, le principe consiste à utiliser un petit glaçon de forme géométrique coloré dans sa masse, fluorescent de surcroît, moulé sur un support, le tout étant intégré à l'intérieur d'une minuscule boite hermétique transparente qui accompagne l'emballage du produit surgelé d'une façon inviolable. Des perfectionnements ont été apportés dans des demandes récentes de brevets français de la demanderesse et notamment 90/14341 du 15 novembre 1990, 91/00101 du 4 janvier 1991 et 91/02442 du 27 février 1991.

La présente invention concerne à la fois de nouvelles réalisations pratiques perfectionnées du dispositif de l'art antérieur et des modes de mise en oeuvre se rapportant à des produits dits "de la première génération" qui consiste à adjoindre à un produit surgelé ou congelé un volume de liquide eutectique congelé dont le point de décongélation constitue un repère, à partir duquel a lieu la rupture de la chaîne du froid ; l'élément d'observation confirmant le phénomène est basé sur la disparition par liquéfaction du volume congelé, constituant la partie active du dispositif.

Les dispositifs de la "deuxième génération" à laquelle appartiennent ceux qui seront décrits ci-après, diffèrent des précédents par le fait qu'ils accompagnent les produits qu'ils doivent surveiller, dès le départ ou au cours du conditionnement de l'emballage de façon à se mettre en état de veille au passage dans le tunnel de congélation. Une rupture de la chaîne du froid est marquée par la coloration des produits absorbants ou adsorbants qui entourent l'étui, le dit étui étant disposé à l'intérieur du boîtier de protection du dispositif.

L'appareillage avec son liquide à base généralement de liquide eutectique, comprend un intégrateur de température qui prend en compte non seulement la variation de température mais également sa durée. Il peut être utilisé pour le froid négatif et le froid positif. Ce procédé simple et peu coûteux a l'avantage d'avoir un fonctionnement irréversible et fiable.

La présente invention concerne notamment un dispositif destiné à être adjoint par fixation (collage ou agrafage) à l'intérieur ou à l'extérieur de l'emballage de protection d'un produit réfrigéré à caractère alimentaire industriel ou pharmaceutique.

L'invention concerne un indicateur de conservation qui adjoint à un produit congelé ou réfrigéré permet par un simple examen de visu, que les conditions de conservation ont été respectées et que la chaine du froid n'a pas été rompue.

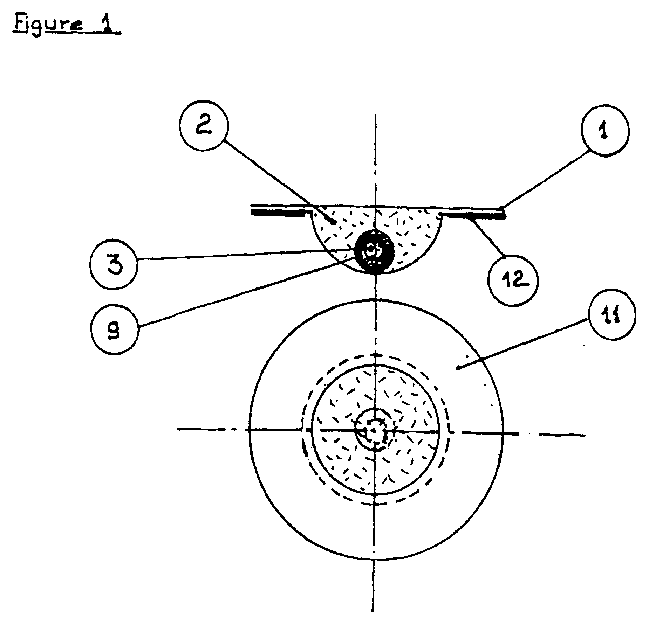

Le dispositif de la figure 1 comprend un boîtier de protection extérieure étanche (1), par exemple, en matière plastique transparente, munie d'une surface utile de fixation (11) sur l'emballage garnie d'un adhésif de fixation (12). A l'intérieur du boîtier, se trouve disposé l'élément générateur du système, constitué par une goutte de liquide eutectique ou d'une solution alcoolique, qui à la limite peut être de l'alcool pur ou tout autre liquide non toxique. Cette goutte est incluse, c'est-à-dire enrobée, dans une matière (paraffine par exemple) qui en constitue l'enveloppe réservoir (9), et ce, à la manière d'un oeuf. L'enveloppe réservoir (9) est obtenue par inclusion d'une goutte de liquide choisie parmi les liquides précédemment désignés, dans la dite matière dont le point de fusion est inférieur à la tension de vapeur du liquide qu'elle enveloppe, et dont les points de congélation et de décongélation sont prédéterminés. La goutte est donc enrobée dans une matière qui est une paraffine ou tout autre matériau équivalent.

Le principe du fonctionnement est le suivant :
. en phase de congélation, le liquide ou goutte (3) qui remplit l'enveloppe réservoir (9) est sensibilisé par conduction thermique à travers le boîtier de protection extérieur (1) ; ceci engendre ainsi la solidification de la goutte de liquide emprisonnée, dont l'augmentation de volume provoque la rupture et l'ouverture de l'enveloppe réservoir (9) qui l'entoure. Une rupture de la chaîne du froid déclenche alors la décongélation et la liquéfaction du volume de la goutte solidifée libérée par la fracture de son enveloppe, et imprègne tout en le colorant un produit absorbant ou adsorbant, ou un indicateur colorimétrique (2) préalablement disposé à la construction de l'indicateur, entre la goutte enrobée dans la dite matière (paraffine par exemple) et l'étui de protection. La dite matière de l'enveloppe réservoir (9) est construite par exemple en paraffine, stéarine ou tout matériel équivalent (par exemple bouchon de cire coulé à chaud sur la surface du liquide, c'est-à-dire de la goutte).

L'appareillage selon l'invention comporte donc (figure (1)) :
. un boîtier étanche (1) muni d'une surface de fixation (11), garnie d'au moins un adhésif de fixation (12),
. une enveloppe réservoir (9) qui peut se rompre ou s'ouvrir sous l'effet de la solidification d'une goutte (3) d'un liquide approprié ; l'enveloppe réservoir étant entourée au moins partiellement d'un produit (2) disposé lui-même à l'intérieur de l'étui de protection, ce produit étant absorbant ou adsorbant ou étant constitué ou contenant un indicateur colorimétrique approprié.

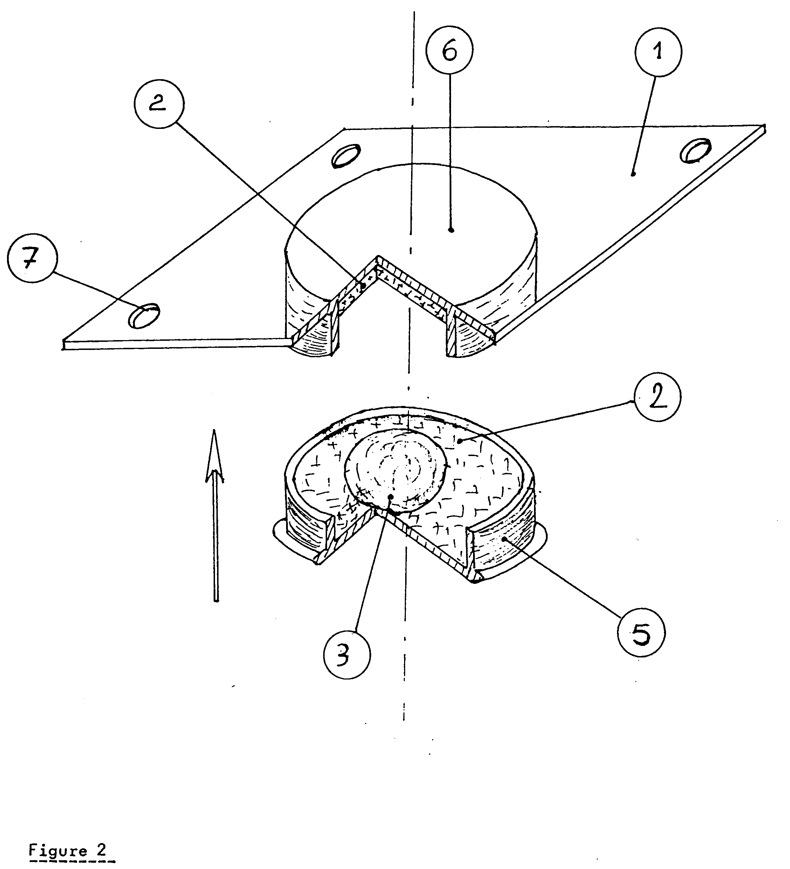

La figure 2 représente un type de dispositif conforme à l'invention, il est constitué des éléments suivants :
1) platine support en matière plastique transparente faisant bouchon de boîtier étanche,
2) matière absorbante ou adsorbante réagissant par colorimétrie au pH du liquide (3) qui constitue la goutte de liquide enrobée, cette matière étant disposée autour de la goutte enrobée,
3) goutte de liquide enrobée d'une enveloppe réservoir (9) de préférence en paraffine ou en stéarine,
5) réceptacle fermant avec la platine 1 un boîtier hermétique étanche,
6) fenêtre d'observation,
7) un moyen (tel que trou ou dispositif équivalent tel que collage, clipsage, etc...) permettant l'amarrage du dispositif ou produit à surveiller.

La présente invention est intéressante par exemple dans les domaines suivants, et à ce titre non limitatif :

### SANTE :

. Pour accompagner les produits alimentaires congelés, surgelés réfrigérés pour lesquels une décongélation recongélation inopinée propice à la génération microbienne est préjudiciable aux produits conservés,
. Pour accompagner les produits réfrigérés (viandes, poissons, etc) lors d'un transport à l'importation ou à l'exportation ou en métropole,
. Pour accompagner des produits pharmaceutiques.

### INDUSTRIE :

. Pour accompagner certains produits de synthèse dans le cas où il est nécessaire de surveiller les ambiances de conservation à partir d'éléments simples affectant l'état physique de certains produits (exemples : point de ramollissement, de goutte, de congélation, de fusion qui sont des valeurs significatives pour la réalisation d'un témoin).

### COMMERCE :

. Pour accompagner tous les produits réfrigérés faisant l'objet d'échange pour prouver le bon état de conservation des produits réfrigérés.

### DANS LE GRAND PUBLIC :

. Pour les utilisateurs de congélateurs afin de surveiller les produits de fabrication familiale. Prouver aux distributeurs d'énergie d'électricité que les produits mis en conservation ont été décongelés par suite d'une coupure de courant.

## Revendications

1. Appareillage comportant (figure (1)) :
. un boîtier étanche (1) muni d'une surface de fixation (11) garnie d'au moins un adhésif de fixation (12),
. une enveloppe réservoir (9) qui peut se rompre ou s'ouvrir sous l'effet de la solidification d'une goutte (3) d'un liquide approprié, la dite enveloppe-réservoir ayant pour rôle d'enrober la dite goutte, la dite enveloppe-réservoir étant fabriquée dans une matière dont le point de fusion est inférieur à la tension de vapeur de la dite goutte qu'elle enveloppe, l'enveloppe réservoir étant entourée au moins partiellement d'un produit (2) disposé lui-même à l'intérieur de l'étui de protection, ce produit étant absorbant ou adsorbant ou étant constitué ou contenant un indicateur colorimétrique.

2. Dispositif selon l'appareil de la revendication 1 et comportant :
. une platine support (1) par exemple en matière plastique transparente, faisant office de bouchon de boîtier étanche,
. une matière (2) absorbante ou adsorbante réagissant par colorimétrie au pH du liquide (3) qui a la forme d'une goutte de liquide, cette matière étant disposée autour de la dite goutte,
. la dite goutte (3) de liquide enrobée d'une enveloppe réservoir (9),
. un réceptacle (5) formant avec la platine (1) un boîtier hermétique étanche,
. un moyen permettant l'amarrage du dispositif au produit à surveiller.

3. Appareillage selon la revendication 1 ou dispositif selon la revendication 2 dans lequel la matière de l'enveloppe-réservoir est en paraffine.

4. Appareillage selon la revendication 1 ou dispositif selon la revendication 2 dans lequel la matière de l'enveloppe-réservoir est en stéarine.

5. Appareillage selon la revendication 1 ou dispositif selon la revendication 2 dans lequel la matière de l'enveloppe-réservoir est un bouchon de cire coulé à chaud sur la surface de la goutte.

6. Goutte enrobée de paraffine ou de stéarine ou d'un matériau équivalent, utilisée dans un appareil ou dispositif selon l'une des revendications 1 et 2.
